# EUROPEAN PATENT SPECIFICATION

(11) **EP 2 207 957 B1**
(45) Date of publication and mention of the grant of the patent: **07.03.2012**
(21) Application number: 08762637.0
(22) Date of filing: 28.05.2008
(51) Int. Cl.: F03D 9/02

(54) **AUTOMATIC WIND GENERATOR ARRANGEMENT FOR THE PRODUCTION OF CONTINUOUS ELECTRICAL POWER**
AUTOMATISCHE WINDGENERATORANORDNUNG ZUR HERSTELLUNG VON KONTINUIERLICHEM ELEKTRISCHEN STROM
ARRANGEMENT D'AÉROGÉNÉRATEUR AUTOMATIQUE POUR LA PRODUCTION DE COURANT ÉLECTRIQUE CONTINU

(30) Priority: 12.06.2007 GR 20070100374; 28.05.2008 GR 20080100363
(43) Date of publication of application: 21.07.2010
(73) Proprietor: Pittas, Nicholas, 26500 Rion Patras (GR)
(72) Inventor: Pittas, Nicholas, 26500 Rion Patras (GR)
(74) Representative: Samuelides, Emmanuel
(86) International application number: PCT/GR2008/000044
(87) International publication number: WO 2008/152432

(56) References cited:
- EP-A- 1 637 733
- EP-A- 1 783 364
- WO-A-02/084116
- WO-A-2004/079185
- DE-A1- 10 220 499

## Description

Green patent no. 1005918 an arrangement is described that is used to store energy in the form of compressed air in an air tight tank via a compressor, for the production of electrical power from a power generator, and then desalination could be possibly achieved from the kinetic energy of the propeller of one or more wind generators that are powered by the wind. This arrangement is modified in this patent application so that there is the possibility of production of electrical energy without the need for consumption of fuel for the operation of the power generator, such as for example disclosed in EP-A-1 783 364.

The problem of the deficiency of energy can be tackled by the use of an energy production arrangement that utilises the velocity of the wind via one or many wind-powered generators appropriately connected with a generator that will be producing power under maximum reliability providing continuous, consistent and uninterrupted electrical power.

Furthermore the frequency and the duration of the interruptions of electrical power supply to the network of some areas gifted by nature with appropriate wind power with the speed of wind there being over 5 m/sec, render the following concept attractive. For the radical solution of the energy deficiency issue, one or more necessary wind-powered generators (of the appropriate capacity) will be connected to a compressor - air turbine couple of the appropriate capacity plus the necessary combustion chamber. An air tight tank of the appropriate volumetric capacity is to be placed between the wind-powered generator(s) and the diesel generator, the tank is to be constructed by reinforced concrete or other appropriate material or perhaps the storage being in an appropriately prepared (made air tight) caves if they exist in close proximity to the tank or the wind-powered generators in order to reduce thus the construction cost of the unit.

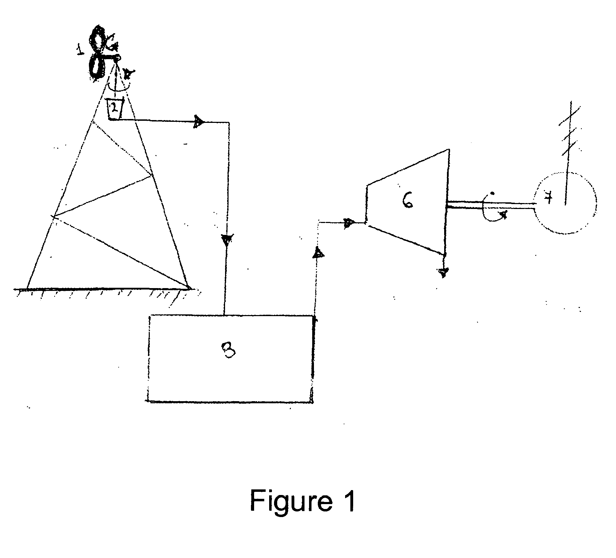

An embodiment of the invention will be described with reference to Figure 1, which shows an automatic wind power arrangement according to the invention.

One or many wind generators are taken into consideration when there is wind and the aim is not to diffuse electrical power to the network and store, or store from the excess of the rotational mechanical energy or diffuse part to the network and store part of it. Then the mechanical coupling via coupling devices of the shaft of the propeller of the wind generator (1), as shown in figure 1 with the rotation shaft of the compressor (2) that compresses the air to the desired degree and introduces it to the air tight tank for the compressed air (3) that has been appropriately shaped and dimensioned so that it can service to a great extent the longest period without wind as this is derived from the statistical analysis of the local wind data.

This compressed air storing process can be performed at any time it is desired so and at the same time electrical power can be produced from the electrical machine (synchronous, asynchronous, other), that is linked to the wind generator shaft. The velocity of the wind can for example exceed 14m/s and be exploit for storing the motion in the region of velocities 14-16 m/s.

In the case of no wind then compressed air will come out from the tank (3) and it will enter a mechanism that generates torque, for example a turbine (6) where the gases expand causing thus the rotation of the shaft of the gas turbine and hence that of the electrical machine (synchronous or asynchronous) (7) that is connected to it producing thus electrical power.

For the complete automatic operation of the system it comes with gears, coupling devices, reduction units, sensors, wind meters (anemometers), pressure switches, PLC, inverters etc.

Hence the production of electrical power is continuous and uninterrupted and this renewable source of energy becomes fully reliable.

## Claims

1. Automatic wind power arrangement for the continuous production of electrical power comprising
a. a wind-powered generator (1) including a propeller mounted on a shaft,
b. a compressor (2) linked to the shaft of the wind-powered generator,
c. an airtight tank (3) connected to the outlet of the compressor (2) to store air that is compressed by the compressor (2),
d. a turbine (6) linked to an electric machine,
**characterized in that** the airtight tank (3) is connected directly to the turbine (6), so that the compressed air expands causing the rotation of the turbine, which rotates the electric machine and thus produces electric power.

2. Automatic wind power arrangement for the continuous production of electrical power according to claim 1, whereby the airtight tank (3) is made of reinforced concrete.

3. Automatic wind power arrangement for the continuous production of electrical power according to claim 1, whereby the wind-powered generator (1) is linked to the compressor (2) through a universal cardan joint.

## Patentansprüche

1. Automatische Windkraftanordnung zur permanenten Erzeugung von elektrischer Energie mit
a. einem windangetriebenen Generator (1), der einen auf einer Welle montierten Rotor umfasst,
b. einem Kompressor (2), der mit der Welle des windangetriebenes Generators verbunden ist,
c. einem luftdichten Speicher (3), der mit dem Ausgang des Kompressors (2) verbunden ist, um durch den Kompressor (2) komprimierte Luft zu speichern,
d. einer Turbine (6), die mit einer elektrischen Maschine verbunden ist,
**dadurch gekennzeichnet, dass** der luftdichte Speicher (3) unmittelbar mit der Turbine (6) verbunden ist, wobei die komprimierte Luft beim Expandieren die Rotation der Turbine verursacht, was die elektrische Maschine rotiert und elektrische Energie erzeugt.

2. Automatische Windkraftanordnung zur permanenten Erzeugung von elektrischer Energie nach dem Anspruch 1, wobei der luftdichte Speicher (3) aus Stahlbeton besteht.

3. Automatische Windkraftanordnung zur permanenten Erzeugung von elektrischer Energie nach dem Anspruch 1, wobei der windangetriebene Generator (1) mit dem Kompressor (2) durch ein universelles Kardangelenk verbunden ist.

## Revendications

1. Agencement éolien automatique de puissance pour la production continue d'énergie électrique comprenant
a. un générateur éolien (1) comprenant un rotor monté sur un arbre,
b. un compresseur (2) relié à l'arbre du générateur éolien,
c. un réservoir étanche (3) connecté à la sortie du compresseur (2) pour emmagasiner de l'air comprimé par le compresseur (2),
d. une turbine (6) reliée à une machine électrique,
**caractérisé en ce que** le réservoir étanche (3) est connecté directement à la turbine (6), de sorte que l'air comprimé en se dilatant provoque la rotation de la turbine, ce qui entraîne la machine électrique en rotation et donc produit de l'énergie électrique.

2. Agencement éolien automatique de puissance pour la production continue d'énergie électrique selon la revendication 1, dans lequel le réservoir étanche (3) est réalisé en béton armé.

3. Agencement éolien automatique de puissance pour la production continue d'énergie électrique selon la revendication 1, dans lequel le générateur éolien (1) est relié au compresseur (2) par l'intermédiaire d'un joint universel de cardan.
